# EUROPEAN PATENT APPLICATION

(11) **EP 4 650 826 A1**
(43) Date of publication of application: **19.11.2025**
(21) Application number: 23918115.9
(22) Date of filing: 29.01.2023
(51) Int. Cl.: G01S 13/42, H04W 88/00

(54) **SENSING METHOD AND DEVICE**

(71) Applicant: Huawei Technologies Co., Ltd., Shenzhen, Guangdong 518129 (CN)
(72) Inventor: ZHANG, Ping, Shenzhen, Guangdong 518129 (CN); LUO, Jiajin, Shenzhen, Guangdong 518129 (CN)
(74) Representative: Körber, Martin Hans
(86) International application number: PCT/CN2023/073669
(87) International publication number: WO 2024/156109

(57) **Abstract**

A sensing method and an apparatus are provided to improve a sensing capability of a communication apparatus, relating to the field of communications technologies. The method includes: A first communication apparatus receives sensing collaboration mode information from a second communication apparatus, where the sensing collaboration mode information includes information about whether the second communication apparatus has a coherent signal processing capability (S201); the first communication apparatus sends a sensing data request to the second communication apparatus (S202); the first communication apparatus receives sensing data from the second communication apparatus (S203), where when the second communication apparatus has the coherent signal processing capability, the sensing data includes an echo signal received by the second communication apparatus, or when the second communication apparatus does not have the coherent signal processing capability, the sensing data includes a sensing result of the second communication apparatus; and the first communication apparatus determines a sensing result of a to-be-sensed target based on the sensing data from the second communication apparatus (S204).

## Description

### TECHNICAL FIELD

Embodiments of this application relate to the field of communication technologies, and in particular, to a sensing method and an apparatus.

### BACKGROUND

In a wireless sensing technology, changes in wireless signals during propagation are analyzed, to obtain a characteristic of signal propagation space and sense a scenario. A radar is a most classic wireless sensing means and is widely used. A basic principle of the radar is to transmit an electromagnetic wave signal to illuminate a target and receive an echo from the target. In this way, information such as a distance from the target to a transmission point of the electromagnetic wave signal, a distance change rate (radial velocity), an azimuth, and a height can be obtained. A main function of a wireless communication system is also to transmit an electromagnetic wave signal and receive an electromagnetic wave signal. Therefore, wireless communication and the wireless sensing technology may be integrated, to sense a surrounding environment when implementing communication.

However, sensing coverage of a single communication apparatus is limited, and it is difficult to implement continuous sensing of a moving target in a complex scenario. In addition, in a scenario with an electromagnetic imaging requirement, because beams of high frequency bands in a 5th generation (5th generation, 5G) mobile communication system are narrow, it is difficult for a single communication apparatus to fully cover a to-be-imaged scene, and when an obstacle exists during line of sight signal transmission, a sensing link fails. Therefore, how to improve a sensing capability of the communication apparatus is a problem that needs to be considered.

### SUMMARY

This application provides a sensing method and an apparatus to improve a sensing capability of a communication apparatus.

According to a first aspect, an embodiment of this application provides a sensing method. The method includes: A first communication apparatus receives sensing collaboration mode information from a second communication apparatus, where the sensing collaboration mode information includes information about whether the second communication apparatus has a coherent signal processing capability; the first communication apparatus sends a sensing data request to the second communication apparatus; the first communication apparatus receives sensing data from the second communication apparatus, where when the second communication apparatus has the coherent signal processing capability, the sensing data includes an echo signal received by the second communication apparatus, or when the second communication apparatus does not have the coherent signal processing capability, the sensing data includes a sensing result of the second communication apparatus; and the first communication apparatus determines a sensing result of a to-be-sensed target based on the sensing data.

According to the foregoing sensing method, the first communication apparatus may be a network device, or a component (for example, a processor, a chip, or a chip system) of the network device, or an apparatus that matches the network device for use, and may be referred to as a first network apparatus in this case. Alternatively, the first communication apparatus may be a terminal device, a component (for example, a processor, a chip, or a chip system) of the terminal device, or an apparatus that matches the terminal device for use, and may be referred to as a first terminal apparatus. The second communication apparatus may be a network device different from the first communication apparatus, or a component (for example, a processor, a chip, or a chip system) of the network device, or an apparatus that matches the network device for use, and may be referred to as a second network apparatus. Alternatively, the second communication apparatus may be a terminal device different from the first communication apparatus, a component (for example, a processor, a chip, or a chip system) of the terminal device, or an apparatus that matches the terminal device for use, and may be referred to as a second terminal apparatus.

According to the foregoing method, sensing collaboration between a plurality of communication apparatuses can be implemented, and sensing data of the plurality of communication apparatuses is combined to determine the sensing result of the to-be-sensed target. This helps improve sensing coverage and sensing accuracy of the communication apparatus, and improves a sensing capability of the communication apparatus.

In a possible design, when the second communication device has the coherent signal processing capability, the sensing data request is used to request the echo signal, or when the second communication device does not have the coherent signal processing capability, the sensing data request is used to request the sensing result.

According to the foregoing design, the first communication apparatus may make a sensing data request of a corresponding type based on the capability of the second communication apparatus, so that the second communication apparatus quickly responds to the sensing data request sent by the first communication apparatus.

In a possible design, the sensing collaboration mode information further includes information about whether the second communication apparatus has a sensing collaboration capability, and before the first communication apparatus sends the sensing data request to the second communication apparatus, the method further includes: The first communication apparatus determines that the second communication apparatus has the sensing collaboration capability.

According to the foregoing design, the sensing collaboration mode information further carries information about whether the communication apparatus has the sensing collaboration capability, so that the communication apparatus quickly selects another communication apparatus for collaboration when the communication apparatus has a sensing collaboration requirement.

In a possible design, when the sensing data includes the echo signal received by the second communication apparatus, that the first communication apparatus determines the sensing result of the to-be-sensed target based on the sensing data includes: The first communication apparatus determines the sensing result of the to-be-sensed target based on a location and a direction of the second communication apparatus, and the echo signal. Optionally, the first communication apparatus may alternatively determine, based on a phase difference between an echo signal of a second network device and an echo signal of a first network device, a time difference between the to-be-sensed target and both the first network device and the second network device, and further determine a distance difference between a distance from the to-be-sensed target to the first network device and a distance from the to-be-sensed target to the second network device, to correct the sensing result like a location of the to-be-sensed target. Alternatively, the first communication apparatus may separately determine, based on phase differences between echo signals of a plurality of second network devices and an echo signal of a first network device, distance differences between distances from the to-be-sensed target to the plurality of second network devices and a distance from the to-be-sensed target to the first network device, and position the to-be-sensed target based on the plurality of distance differences, for example, position the to-be-sensed target by using a time difference of arrival (time difference of arrival, TDOA) positioning technology, to obtain the sensing result of the to-be-sensed target.

According to the foregoing design, the first communication apparatus may combine an echo signal of the second communication apparatus with the echo signal of the first communication apparatus, to position the to-be-sensed target, for example, to perform TDOA positioning on the to-be-sensed target. This helps improve sensing accuracy of the sensed target.

In a possible design, the method further includes: The first communication apparatus receives sensing capability information from the second communication apparatus, where the sensing capability information includes one or more of the following information about the second communication apparatus: range resolution, range accuracy, angular resolution, angular accuracy, Doppler resolution, and Doppler accuracy; and the first communication apparatus determines that a sensing capability of the second communication apparatus meets a sensing requirement for the to-be-sensed target.

According to the foregoing design, the first communication apparatus may select, according to the sensing requirement for the to-be-sensed target, the second communication apparatus for sensing collaboration. This helps meet a sensing requirement of a user for the to-be-sensed target.

According to a second aspect, an embodiment of this application provides a sensing method. The method includes: A second communication apparatus sends sensing collaboration mode information to a first communication apparatus, where the sensing collaboration mode information includes information about whether the second communication apparatus has a coherent signal processing capability; the second communication apparatus receives a sensing data request from the first communication apparatus; and the second communication apparatus sends sensing data to the first communication apparatus, where when the second communication apparatus has the coherent signal processing capability, the sensing data includes an echo signal received by the second communication apparatus, or when the second communication apparatus does not have the coherent signal processing capability, the sensing data includes a sensing result of the second communication apparatus.

According to the foregoing sensing method, the first communication apparatus may be a network device, or a component (for example, a processor, a chip, or a chip system) of the network device, or an apparatus that matches the network device for use, and may be referred to as a first network apparatus in this case. Alternatively, the first communication apparatus may be a terminal device, a component (for example, a processor, a chip, or a chip system) of the terminal device, or an apparatus that matches the terminal device for use, and may be referred to as a first terminal apparatus. The second communication apparatus may be a network device different from the first communication apparatus, or a component (for example, a processor, a chip, or a chip system) of the network device, or an apparatus that matches the network device for use, and may be referred to as a second network apparatus. Alternatively, the second communication apparatus may be a terminal device different from the first communication apparatus, a component (for example, a processor, a chip, or a chip system) of the terminal device, or an apparatus that matches the terminal device for use, and may be referred to as a second terminal apparatus.

In a possible design, when the second communication device has the coherent signal processing capability, the sensing data request is used to request the echo signal, or when the second communication device does not have the coherent signal processing capability, the sensing data request is used to request the sensing result.

In a possible design, the sensing collaboration mode information further includes information about whether the second communication apparatus has a sensing collaboration capability.

In a possible design, the method further includes: The second communication apparatus sends sensing capability information to the first communication apparatus, where the sensing capability information includes at least one of the following: range resolution, range accuracy, angular resolution, angular accuracy, Doppler resolution, and Doppler accuracy.

According to a third aspect, an embodiment of this application provides a first communication apparatus. The first communication apparatus may be used in the communication apparatus in the first aspect. The first communication apparatus may be a network device, an apparatus (for example, a chip, a chip system, or a circuit) in the network device, an apparatus that can match the network device for use, or the like. The first communication apparatus may be a terminal device, a component (for example, a processor, a chip, or a chip system) of the terminal device, an apparatus that matches the terminal device for use, or the like.

In a possible implementation, the first communication apparatus may include modules or units that are in one-to-one correspondence with the methods/operations/steps/actions described in the first aspect. The modules or the units may be implemented by a hardware circuit, software, or a combination of a hardware circuit and software.

In a possible design, the first communication apparatus may include an interface unit and a processing unit. The interface unit is configured to: receive sensing collaboration mode information from a second communication apparatus, where the sensing collaboration mode information includes information about whether the second communication apparatus has a coherent signal processing capability; send a sensing data request to the second communication apparatus; and receive sensing data from the second communication apparatus, where when the second communication apparatus has the coherent signal processing capability, the sensing data includes an echo signal received by the second communication apparatus, or when the second communication apparatus does not have the coherent signal processing capability, the sensing data includes a sensing result of the second communication apparatus. The processing unit is configured to determine a sensing result of a to-be-sensed target based on the sensing data.

In a possible design, when the second communication device has the coherent signal processing capability, the sensing data request is used to request the echo signal, or when the second communication device does not have the coherent signal processing capability, the sensing data request is used to request the sensing result.

In a possible design, the sensing collaboration mode information further includes information about whether the second communication apparatus has a sensing collaboration capability, and before the interface unit sends the sensing data request to the second communication apparatus, the processing unit is further configured to determine that the second communication apparatus has the sensing collaboration capability.

In a possible design, when the sensing data includes the echo signal received by the second communication apparatus, and when the processing unit determines the sensing result of the to-be-sensed target based on the sensing data, the processing unit is specifically configured to determine the sensing result of the to-be-sensed target based on a location and an antenna direction of the second communication apparatus, and the echo signal.

In a possible design, the interface unit is further configured to receive sensing capability information from the second communication apparatus, where the sensing capability information includes one or more of the following information about the second communication apparatus: range resolution, range accuracy, angular resolution, angular accuracy, Doppler resolution, and Doppler accuracy; and the processing unit is further configured to determine that a sensing capability of the second communication apparatus meets a sensing requirement for the to-be-sensed target.

According to a fourth aspect, an embodiment of this application provides a second communication apparatus. The second communication apparatus may be used in the communication apparatus in the second aspect. The second communication apparatus may be a network device, an apparatus (for example, a chip, a chip system, or a circuit) in the network device, or an apparatus that can match the network device for use. The second communication apparatus may be a terminal device, a component (for example, a processor, a chip, or a chip system) of the terminal device, an apparatus that matches the terminal device for use, or the like.

In a possible implementation, the second communication apparatus may include modules or units that are in one-to-one correspondence with the methods/operations/steps/actions described in the second aspect. The modules or the units may be implemented by a hardware circuit, software, or a combination of a hardware circuit and software.

In a possible implementation, the second communication apparatus may include: an interface unit and a processing unit. The processing unit is configured to determine sensing collaboration mode information, where the sensing collaboration mode information includes information about whether the second communication apparatus has a coherent signal processing capability. The interface unit is configured to: send sensing collaboration mode information to a first communication apparatus, receive a sensing data request from the first communication apparatus, and send sensing data to the first communication apparatus. When the second communication apparatus has the coherent signal processing capability, the sensing data includes an echo signal received by the second communication apparatus, or when the second communication apparatus does not have the coherent signal processing capability, the sensing data includes a sensing result of the second communication apparatus.

In a possible design, when the second communication device has the coherent signal processing capability, the sensing data request is used to request the echo signal, or when the second communication device does not have the coherent signal processing capability, the sensing data request is used to request the sensing result.

In a possible design, the sensing collaboration mode information further includes information about whether the second communication apparatus has a sensing collaboration capability.

In a possible design, the interface unit is further configured to send sensing capability information to the first communication apparatus, where the sensing capability information includes at least one of the following: range resolution, range accuracy, angular resolution, angular accuracy, Doppler resolution, and Doppler.

According to a fifth aspect, an embodiment of this application provides a communication apparatus. The communication apparatus includes an interface circuit and a processor, and the processor and the interface circuit are coupled to each other. The processor is configured to implement the method according to the first aspect or the second aspect through a logic circuit or by executing instructions. The interface circuit is configured to: receive a signal from a communication apparatus other than the communication apparatus and transmit the signal to the processor, or send a signal from the processor to a communication apparatus other than the communication apparatus. It can be understood that the interface circuit may be a transceiver, a transceiver machine, a transceiver, or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory.

According to a sixth aspect, an embodiment of this application provides a computer-readable storage medium. The computer-readable storage medium stores a computer program or instructions. When the computer program or the instructions are executed by a processor, the method according to the first aspect or the second aspect can be implemented.

According to a seventh aspect, an embodiment of this application further provides a computer program product, including a computer program or instructions. When the computer program or the instructions are executed by a processor, the method according to the first aspect or the second aspect can be implemented.

According to an eighth aspect, an embodiment of this application further provides a chip system. The chip system includes a processor. The processor is configured to be coupled to a memory. The memory is configured to store a program or instructions. When the program or the instructions are executed by the processor, the method according to the first aspect or the second aspect can be implemented.

According to a ninth aspect, an embodiment of this application further provides a communication system. The system may include the first communication apparatus in the first aspect and the second communication apparatus in the second aspect.

For technical effects that can be achieved in the second aspect to the ninth aspect, refer to the technical effects that can be achieved in the first aspect. Details are not described herein again.

### BRIEF DESCRIPTION OF DRAWINGS

FIG. 1 is a diagram of an architecture of a communication system according to an embodiment of this application;
FIG. 2 is a diagram 1 of a sensing method according to an embodiment of this application;
FIG. 3 is a diagram of sensing collaboration of a plurality of communication apparatuses according to an embodiment of this application;
FIG. 4 is a diagram of determining a sensing result according to an embodiment of this application;
FIG. 5 is a diagram of collaboration data transmission between communication apparatuses according to an embodiment of this application;
FIG. 6 is a diagram 2 of a sensing method according to an embodiment of this application;
FIG. 7 is a diagram 1 of a structure of a communication apparatus according to an embodiment of this application; and
FIG. 8 is a diagram 2 of a structure of a communication apparatus according to an embodiment of this application.

### DESCRIPTION OF EMBODIMENTS

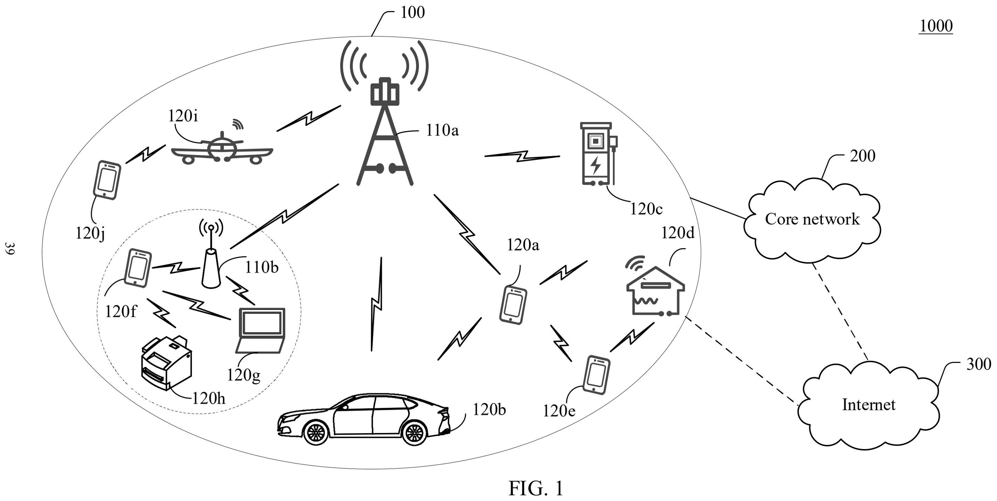

For ease of understanding of embodiments of this application, an application scenario used in this application is described by using an architecture of a communication system shown as FIG. 1 as an example. FIG. 1 is a possible and non-limiting diagram of a system according to an embodiment of this application. As shown in FIG. 1, the communication system 1000 includes a radio access network (radio access network, RAN) 100, and a core network (core network, CN) 200. Optionally, the communication system 1000 may further include the Internet 300. The RAN 100 includes at least one network device (101a and 101b in FIG. 1, collectively referred to as 110) and at least one terminal device (102a to 102j in FIG. 1, collectively referred to as 102). The RAN 100 may further include another RAN node, for example, a wireless relay device and/or a wireless backhaul device (not shown in FIG. 1). The terminal device 102 is connected to the network device 101 in a wireless manner. The network device 101 is connected to the core network 200 in a wireless or wired manner. A core network device in the core network 200 and the network device 101 in the RAN 100 may be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4th generation (4th generation, 4G) mobile communication system, a 5th generation (5th generation, 5G) mobile communication system, or an evolved system after 5G (for example, a 6G mobile communication system). The RAN 100 may alternatively be an open access network (open RAN, O-RAN, or ORAN), a cloud radio access network (cloud radio access network, CRAN), or a Wi-Fi system. Alternatively, the RAN 100 may be a communication system that integrates the foregoing two or more systems.

The apparatus provided in this embodiment of this application may be used in the network device 101 or the terminal device 102. It may be understood that FIG. 1 shows only one possible architecture of the communication system to which embodiments of this application may be applied. In another possible scenario, the architecture of the communication system may alternatively include another device.

The network device 101 is a node in a radio access network (radio access network, RAN), and may also be referred to as an access network device or a RAN node (or device). The network device 101 is configured to help the terminal device implement wireless access. A plurality of network devices 101 in the communication system 1000 may be nodes of a same type, or may be nodes of different types. In some scenarios, roles of the network device 101 and the terminal device 102 are relative. For example, a network element 102i in FIG. 1 may be a helicopter or an uncrewed aerial vehicle, and may be configured as a mobile base station. For the terminal device 102j that accesses the RAN 100 by using the network element 102i, the network element 102i is a base station. For a base station 101a, the network element 102i is a terminal device. Both the network device 101 and the terminal device 102 are sometimes referred to as communication apparatuses. For example, network elements 101a and 101b in FIG. 1 may be understood as communication apparatuses having a base station function, and network elements 102a to 102j may be understood as communication apparatuses having a terminal device function.

In a possible scenario, the network device may be a base station (base station), an evolved base station (evolved NodeB, eNodeB), a transmit/receive point (transmitting and receiving point, TRP), a transmission point (transmitting point, TP), a next generation NodeB (next generation NodeB, gNB), a next generation base station in a 6th generation (6th generation, 6G) mobile communication system, a base station in a future mobile communication system, a satellite, an access point (access point, AP) in a Wi-Fi system, an integrated access and backhaul (integrated access and backhaul, IAB) node, or a network device that is in a non-terrestrial network (non-terrestrial network, NTN) communication system of a mobile switching center and that may be deployed on a high-altitude platform or a satellite, or the like. The network device may be a macro base station (for example, 110a in FIG. 1), a micro base station or an indoor base station (for example, 110b in FIG. 1), a relay node or a donor node, or a radio controller in a CRAN scenario. Alternatively, the network device may be a device that functions as a base station in device to device (device to device, D2D) communication, internet of vehicles communication, uncrewed aerial vehicle communication, or machine-to-machine communication. Optionally, the network device may be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of network devices collaborate to assist the terminal device in implementing radio access, and different network devices separately implement some functions of a base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented by using a software module, a hardware module, or a combination of a software module and a hardware module.

In embodiments of this application, a form of the network device is not limited. An apparatus configured to implement a function of the network device may be the network device, or may be an apparatus that can support the network device in implementing the function, for example, a chip system. The apparatus may be installed in the network device or match the network device for use.

The terminal device 102 may also be referred to as a terminal, user equipment (user equipment, UE), a mobile station (mobile station, MS), a mobile terminal (mobile terminal, MT), or the like, or is a device that provides a user with voice or data connectivity, or may be an internet of things device. For example, the terminal device includes a handheld device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smartwatch, a smart band, or a pedometer), a vehicle-mounted device (for example, a vehicle-mounted device on an automobile, a bicycle, an electric vehicle, an aircraft, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), an intelligent robot, a mechanical arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, an intelligent robot, a hot balloon, an uncrewed aerial vehicle, or an aircraft), or the like. The terminal device may alternatively be another device having a terminal function. For example, the terminal device may alternatively be a device functioning as a terminal function in D2D communication.

A device form of the terminal device is not limited in embodiments of this application. An apparatus configured to implement a function of the terminal device may be the terminal device, or may be an apparatus that can support the terminal device in implementing the function, for example, a chip system. The apparatus may be mounted in a terminal device or match a terminal device for use. In this embodiment of this application, the chip system may include a chip, or may include a chip and another discrete component.

For ease of understanding by a person skilled in the art, before embodiments of this application are described, some terms in this application are first explained and described.
(1) Line of sight (line of sight, LOS) is line of sight transmission of a wireless signal, namely, straight path propagation of the wireless signal between a transmit end and a receive end; and non line of sight (non line of sight, NLOS) is non line of sight transmission of a wireless signal, namely, non-straight path propagation of the wireless signal between the transmit end and the receive end, for example, reflection by the ground or an obstacle.
(2) Basic working principle of sensing is as follows: A transmitter of a sensing device transmits an electromagnetic wave signal in a specific direction in space through an antenna, and an object in the direction reflects an encountered electromagnetic wave signal. The sensing device receives and processes the reflected electromagnetic wave signal (namely, an echo signal) through the antenna, the reflected electromagnetic wave signal, and extracts some information about the object (such as a distance from the target object to the sensing device, a distance change rate or a radial velocity, an azimuth, and a height). The sensing device can sense a specific target by transmitting an electromagnetic wave signal and processing a received echo signal, for example, can determine a distance from the target to the sensing device, a distance change rate or a radial velocity, an azimuth, or a height. The sensing device can further implement sensing imaging of an environment, for example, can determine distances from all targets in a sensing range to the sensing device, distance change rates or radial velocities, azimuths, heights, or the like, to track the distances from all the targets in the sensing range to the sensing device, the distance change rates or the radial velocities, the azimuths, the heights, or the like.

Principle of distance measurement: The principle of distance measurement is essentially to measure a time difference between transmitting the electromagnetic wave signal and receiving the echo signal. Because the electromagnetic wave propagates at a speed of light, an accurate distance between the sensing device and the target can be determined.

Principle of speed measurement: The Principle of speed measurement is that the sensing device generates Doppler effect based on relative movement between the sensing device and the target. A frequency at which the sensing device receives the echo signal of the target is different from a transmit frequency of the sensing device, and a difference between the two frequencies is referred to as a Doppler frequency. One piece of main information that may be extracted from the Doppler frequency is the distance change rate between the sensing device and the target.

Principle of azimuth measurement: The electromagnetic wave signal transmitted by the sensing device propagates in a straight line in space (approximately a uniform medium). The electromagnetic wave is reflected when encountering a target during propagation. The antenna of the sensing device has good directivity and can directionally transmit and receive the electromagnetic wave signal. If the antenna rotates and sequentially transmits and receives the electromagnetic wave signal in all directions, when a target echo is received in a specific direction, a current direction of the antenna indicates a direction of the target. In actual use, an antenna linkage apparatus is used to maintain directional synchronization between a scanning line and the antenna. In this case, a direction in which an echo image appears on a fluorescent screen is the azimuth of the target, and may be read by using an azimuth around the fluorescent screen.

Principle of height measurement: measuring an elevation beam with a narrow elevation angle based on a sharp azimuth beam of the antenna, and then calculating a height of the target based on the elevation angle and a distance.

(3) Time difference of arrival (time difference of arrival, TDOA) positioning technology: In the TDOA positioning technology, a location of the target may be determined by measuring transmission delay differences between the target and a plurality of first devices. For example, the target is a second device, and the plurality of first devices are three first devices. A distance difference R21 between a distance R1 from the second device to a first device 1 and a distance R2 from the second device to a first device 2 may be calculated based on a time difference of arrival between time of arrival from the second device to the first device 1 and time of arrival from the second device to the first device 2, that is, R21=R2-R1. Similarly, a distance difference R31 between the distance R1 from the second device to the first device 1 and a distance R3 from the second device to a first device 3 may be calculated based on a time difference of arrival between the time of arrival from the second device to the first device 1 and time of arrival from the second device to the first device 3, that is, R31=R3-R1. In this case, the second device is located on both a hyperbola 1 that uses the first device 1 and the first device 2 as focal points where a distance difference between distances from the second device to the two focal points is always R21, and a hyperbola 2 that uses the first device 1 and the first device 3 as focal points where a distance difference between distances from the second device to the two focal points is always R31. In other words, the second device is located at an intersection point of the hyperbola 1 and the hyperbola 2, so that a location of the second device can be determined.

Currently, in wireless communication, a communication apparatus may transmit an electromagnetic wave signal and receive an echo signal of the electromagnetic wave signal, to sense a surrounding environment. However, sensing coverage of a single communication apparatus is limited, and it is difficult to implement continuous sensing of a moving target in a complex scenario. In addition, in a scenario with an electromagnetic imaging requirement, because beams of high frequency bands in a 5G mobile communication system are narrow, it is difficult for a single communication apparatus to fully cover a to-be-imaged scene, and when an obstacle exists during LOS signal transmission, a sensing link fails. Therefore, how to improve a sensing capability of the communication apparatus is a problem that needs to be considered. Based on this, this application provides a sensing method and an apparatus, to improve a sensing range of a communication apparatus through mutual collaboration between a plurality of communication apparatuses. The following describes in detail embodiments of this application with reference to accompanying drawings.

In addition, it should be understood that ordinal numbers such as "first" and "second" mentioned in embodiments of this application are used to distinguish between a plurality of objects, and are not used to limit sizes, content, a sequence, a time sequence, priorities, importance degrees, or the like of the plurality of objects. For example, a first communication apparatus and a second communication apparatus do not mean different priorities, importance degrees, or the like corresponding to the two communication apparatuses.

In embodiments of this application, unless otherwise specified, a number of a noun indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one (piece) of a, b, or c represents a, b, c, a and b, a and c, b and c, or a, b, and c, where a, b, and c may be singular or plural.

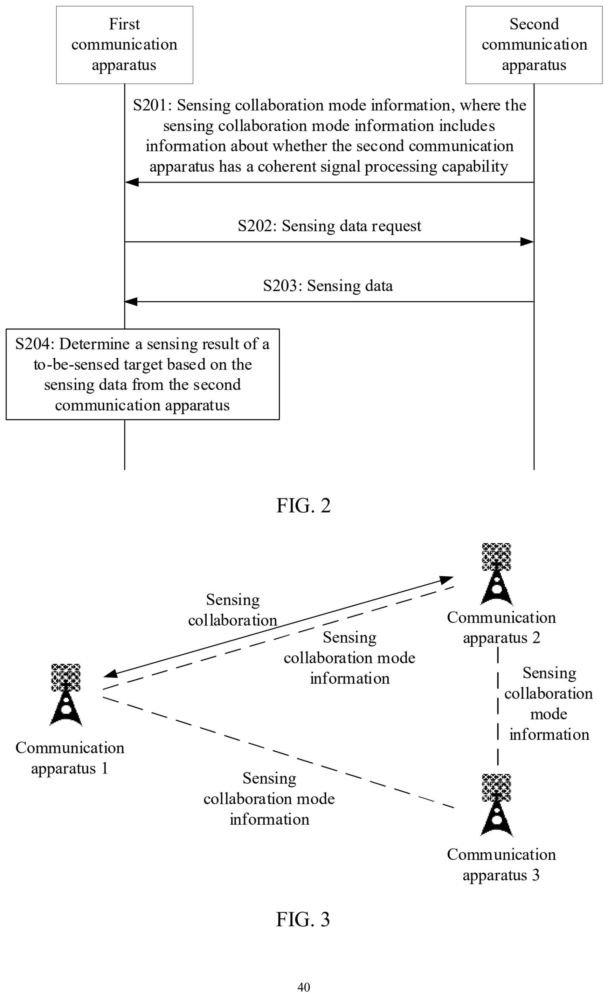

FIG. 2 is an exchange diagram of a sensing method according to an embodiment of this application. FIG. 2 shows the method by using an example in which the methods are performed by a first communication apparatus and a second communication apparatus. The first communication apparatus may be a network device, a component (for example, a processor, a chip, or a chip system) of the network device, or an apparatus that matches the network device for use, and may be referred to as a first network apparatus in this case. Alternatively, the first communication apparatus may be a terminal device, a component (for example, a processor, a chip, or a chip system) of the terminal device, or an apparatus that matches the terminal device for use, and may be referred to as a first terminal apparatus. The second communication apparatus may be a network device different from the first communication apparatus, a component (for example, a processor, a chip, or a chip system) of the network device, or an apparatus that matches the network device for use, and may be referred to as a second network apparatus. Alternatively, the second communication apparatus may be a terminal device different from the first communication apparatus, a component (for example, a processor, a chip, or a chip system) of the terminal device, or an apparatus that matches the terminal device for use, and may be referred to as a second terminal apparatus. The method includes the following steps.

S201: The second communication apparatus sends sensing collaboration mode information to the first communication apparatus, and correspondingly, the first communication apparatus receives the sensing collaboration mode information.

The sensing collaboration mode information includes information about whether the second communication apparatus has a coherent (coherent) signal processing capability.

Different communication devices may have different signal processing capabilities due to different hardware and/or software used by the communication devices. The signal processing capability may include a capability of synchronizing time and signal phases with another device.

Coherent may also be referred to as phase synchrony. That a communication apparatus A has a coherent signal processing capability means that hardware and/or software of the communication apparatus A or an apparatus matching the communication apparatus A can support time and signal phase synchronization between the communication apparatus A and another device. That a communication apparatus B does not have a coherent signal processing capability means that hardware and/or software of the communication apparatus B or an apparatus matching the communication apparatus cannot support time and signal phase synchronization between the communication apparatus B and another device. When the communication apparatus A has the coherent signal processing capability, and the another device requests the communication apparatus A to perform sensing collaboration on a target, because the communication apparatus A may synchronize time (for example, share a clock source) with the another device, and send an electromagnetic wave signal for sensing that is coherent (for example, has a constant phase difference) with the another device, a time difference of arrival between time of arrival from the target to the communication apparatus A and time of arrival from the target to the another device may be determined based on a phase difference between an echo signal received by the communication apparatus A and an echo signal received by the another device. In this case, a distance difference between a distance from the target to the communication apparatus A and a distance from the target to the another device is determined. Therefore, when the communication apparatus A has the coherent signal processing capability, and the another device performs sensing collaboration with the communication apparatus A, if the communication apparatus A feeds back an echo signal to the another device, the another device can further obtain the distance difference between the distance from the target to the communication apparatus A and the distance from the target to the another device, to correct a sensing result, for example, a location of the target. For example, the another device corrects whether the target is located on a hyperbola that uses the communication apparatus A and the another device as focal points where a distance difference between distances from the target to the two focal points is always the obtained distance difference. Alternatively, the target may be further positioned based on a plurality of distance differences between distances from the target to a plurality of communication apparatuses and the distance from the target to the another device, for example, the target is positioned by using a TDOA positioning technology, to obtain the location of the target. Therefore, in this embodiment of this application, when a communication apparatus has the coherent signal processing capability, and the communication apparatus receives a sensing data request from another device or apparatus, sensing data fed back to the another device or apparatus may include a sensing result of the communication apparatus, and an echo signal of the communication apparatus.

In a possible implementation, the second communication apparatus sends the sensing collaboration mode information by using a broadcast or multicast message, so that an apparatus (for example, the first communication apparatus) for receiving the broadcast or multicast message learns of a sensing collaboration mode of the second communication apparatus.

In a possible implementation, the second communication apparatus periodically broadcasts or multicasts the sensing collaboration mode information.

In still another possible implementation, the second communication apparatus sends the sensing collaboration mode information based on a request. For example, the second communication apparatus receives a sensing collaboration mode information request broadcast by the first communication apparatus, and sends the sensing collaboration mode information to the first communication apparatus in response to the request. Optionally, the second communication apparatus may broadcast, multicast, or unicast the sensing collaboration mode information to the first communication apparatus.

The sensing collaboration mode information may also be referred to as a sensing collaboration mode table. For example, when the second communication apparatus is a second network apparatus, the sensing collaboration mode information may be specifically BSCoordinateModeInformation signaling.

In a possible design, the sensing collaboration mode information further includes information about whether the second communication apparatus has a sensing collaboration (collaboration) capability. Because different communication apparatuses may use different hardware and/or software, a communication apparatus may have a sensing collaboration capability with the another device, or may not have a sensing collaboration capability with the another device. In this implementation, the another apparatus may learn whether the second communication apparatus has the sensing collaboration capability, to determine whether to request to collaborate with the second communication apparatus.

S202: The first communication apparatus sends a sensing data request to the second communication apparatus, and correspondingly, the second communication apparatus receives the sensing data request.

When there is a sensing requirement, the first communication apparatus may select, from a second communication apparatus with the sensing collaboration capability based on sensing collaboration mode information received by the first communication apparatus from one or more second communication apparatuses, one or more second communication apparatuses that perform sensing collaboration with the first communication apparatus, and send the sensing data request to the selected one or more second communication apparatuses.

For example, refer to a diagram of sensing collaboration of a plurality of communication apparatuses shown as FIG. 3. In FIG. 3, there are three communication apparatuses: a communication apparatus 1, a communication apparatus 2, and a communication apparatus 3. Sensing collaboration mode information sent by the communication apparatus 2 includes information that the communication apparatus 2 has the sensing collaboration capability, and sensing collaboration mode information sent by the communication apparatus 3 includes information that the communication apparatus 3 does not have the sensing collaboration capability. After receiving a sensing request for a sensing target A, the communication apparatus 1 (the first communication apparatus) may send a sensing data request to the communication apparatus 2 (the second communication apparatus), and perform sensing collaboration with the communication apparatus 2.

In a possible implementation, the first communication apparatus may be further preconfigured with one or more of the sensing collaboration mode information, such as whether one or more communication apparatuses have the sensing collaboration capability, and whether the one or more communication apparatuses have the coherent signal processing capability. The first communication apparatus may alternatively select, based on the preconfigured information about whether the one or more communication apparatuses have the sensing collaboration capability, a second communication apparatus for sensing collaboration, and/or learn of, based on the preconfigured information about whether the one or more communication apparatuses have the coherent signal processing capability, information about whether the selected second communication apparatus has the coherent signal processing capability.

In some implementations, the second communication apparatus may further send sensing capability information (or a sensing capability table) by using a broadcast or multicast message, so that an apparatus (for example, the first communication apparatus) that receives the broadcast or multicast message learns of the sensing capability information of the second communication apparatus. The sensing capability information may include one or more of the following information about the second communication apparatus: range resolution, range accuracy, angular resolution, angular accuracy, Doppler resolution, and Doppler accuracy. In some possible implementations, the sensing capability information may further include one or more of the following information about the second communication apparatus: a location, an antenna direction, a frequency band and a bandwidth, a number of TRPs, and a dimension of an antenna array element and a number of antenna array elements.

In a possible implementation, the second communication apparatus may periodically broadcast or multicast the sensing capability information.

In still another possible implementation, the second communication apparatus may send the sensing capability information based on a request. For example, the second communication apparatus receives a sensing capability information request broadcast by the first communication apparatus, and sends the sensing capability information to the first communication apparatus in response to the request. Optionally, the second communication apparatus may broadcast, multicast, or unicast the sensing capability information to the first communication apparatus.

The first communication apparatus may alternatively select, based on collaboration mode information and sensing capability information of a second communication apparatus, a second communication apparatus for sensing collaboration, for example, select a second communication apparatus that has the sensing collaboration capability and that meets a sensing requirement for a to-be-sensed target as the second communication apparatus for sensing collaboration. For example, both the communication apparatus 2 and the communication apparatus 3 have the sensing collaboration capability, angular resolution of the communication apparatus 2 is 0.1 degree and angular accuracy of the communication apparatus 2 is 99%, angular resolution of the communication apparatus 3 is 1 degree and angular accuracy of the communication apparatus 3 is 99%, and a sensing requirement of the first communication apparatus (the communication apparatus 1) for the to-be-sensed target is that angular resolution is less than 0.5 degree and angular accuracy is greater than 95%. In this case, the first communication apparatus may select the communication apparatus 2 as the second communication apparatus for sensing collaboration.

It should be understood that, different resources such as processing resources, antennas, and the like of the second communication apparatus that are used for sensing may cause a change in a sensing capability of the second communication apparatus, for example, may cause a change in the sensing capability of the second communication apparatus, for example, range resolution, range accuracy, angular resolution, angular accuracy, Doppler resolution, or Doppler accuracy. In a possible implementation, after at least one sensing capability of the second communication apparatus changes, the second communication apparatus may send updated sensing capability information of the second communication apparatus in a multicast or broadcast manner or the like, so that another communication apparatus that receives the sensing capability information learns of the updated sensing capability information of the second communication apparatus.

For example, when the second communication apparatus is the second network apparatus, the sensing capability information (BSSensingCapabilityInformation) may include a base station location (bsLocation) field used to carry a location of the second network apparatus, a frequency (frequency) field used to carry a frequency band, a bandwidth (bandwidth) field used to carry a bandwidth, a number of TRPs (numOfTRPs) field used to carry a number of transmit/receive points TRPs, an antenna direction (antennaDirection) field used to carry an antenna direction, a number of antenna array elements (numOfAntennaArraryElementsDim) field used to carry a dimension of an antenna array element and a number of antenna array elements, a range resolution (range resolution) and range accuracy (range accuracy) field used to carry range resolution and range accuracy, an angular resolution (angular resolution) and angular accuracy (angular accuracy) field used to carry angular resolution and angular accuracy, a Doppler resolution (Doppler resolution) and Doppler accuracy (Doppler accuracy) field used to carry Doppler resolution and Doppler accuracy, and the like.

It should be understood that the manner in which the second communication apparatus sends the sensing collaboration mode information and the sensing capability information is also applicable to another communication apparatus, for example, the first communication apparatus. The following uses the first communication apparatus as an example. When there is a sensing requirement, a communication apparatus that receives sensing collaboration mode information and sensing capability information sent by the first communication apparatus may also determine, based on the sensing collaboration mode information and the sensing capability information of the first communication apparatus, whether to select the first communication apparatus for sensing collaboration.

S203: The second communication apparatus sends sensing data to the first communication apparatus, and correspondingly, the first communication apparatus receives the sensing data from the second communication apparatus.

When the second communication apparatus has the coherent signal processing capability, the sensing data includes an echo signal received by the second communication apparatus, or when the second communication apparatus does not have the coherent signal processing capability, the sensing data includes a sensing result of the second communication apparatus.

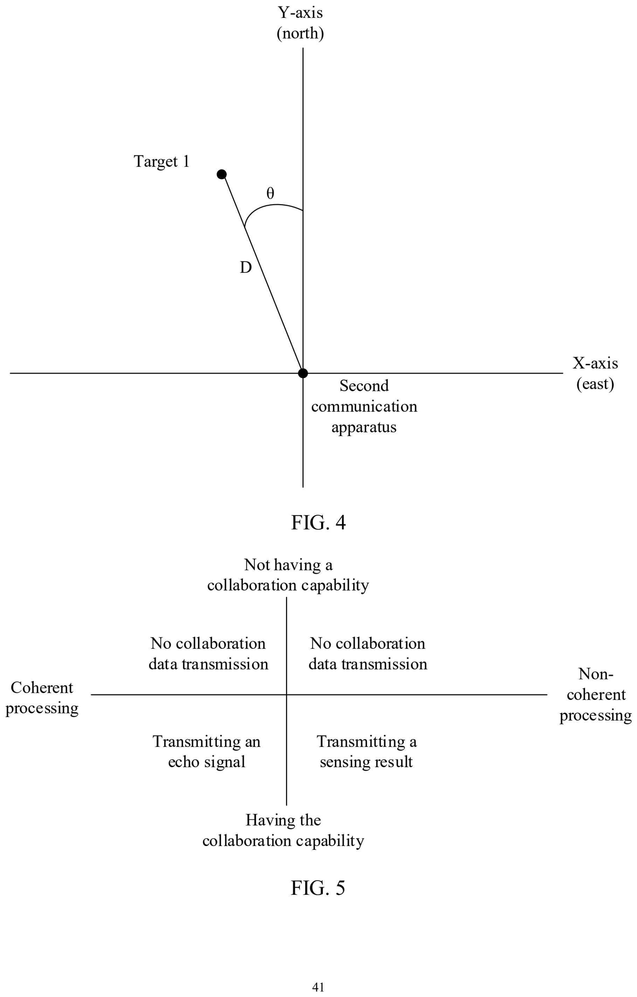

The second communication apparatus may send an electromagnetic wave signal for sensing in a specific direction in space, and receive an echo signal (namely, an electromagnetic wave signal reflected by an object in the direction), to determine information such as a distance from the target (for example, a terminal device) existing in the direction to the second communication apparatus and a distance change rate (radial velocity). The second communication apparatus may further determine information such as a location, a movement direction, and a movement speed of a sensed target in a real coordinate system (for example, a world coordinate system) with reference to the location of the second communication apparatus and a direction of an antenna that transmits an electromagnetic wave signal. For example, a location of a target is sensed. Refer to a diagram of determining a sensing result shown as FIG. 4. The second communication apparatus may determine a distance D between a target 1 and the second communication apparatus based on a direction θ of the antenna sending an electromagnetic wave signal for sensing and a time difference between transmitting the electromagnetic wave signal and receiving an echo signal, to determine a location of the target 1 relative to the second communication apparatus. The second communication apparatus may determine a location of the target 1 in the world coordinate system with reference to the location of the second communication apparatus.

Optionally, after receiving the electromagnetic wave signal for sensing from the second communication apparatus, an active target like the terminal device may further send identification information of the active target to the second communication apparatus, and the second communication apparatus may further mark a sensing result of the target based on the identification information sent by the target. In an example, the second communication apparatus sends, in the direction θ, an electromagnetic wave signal for sensing, receives an echo signal, determines information such as a location, a movement direction, and a movement speed of the target 1 in the direction θ in the world coordinate system, and receives identification information sent by the target 1, for example, a name of the target 1: terminal device A. In this case, it may be determined that the sensed target 1 is the terminal device A, and information such as a location, a movement direction, and a movement speed of the terminal device A in the world coordinate system is determined.

For a passive target, the second communication apparatus may identify a sensed target with reference to information, such as a name, a location, a movement direction, and an echo feature, about each target present before sensing, and mark the sensed target.

In this embodiment of this application, when the second communication apparatus does not have the coherent signal processing capability, for the sensing data request of the first communication apparatus, the second communication apparatus may return the sensing result of the target to the first communication apparatus, for example, information such as a location, a movement direction, and a movement speed of the target in the world coordinate system. In addition, when the second communication apparatus has the coherent signal processing capability, the second communication apparatus may synchronize time (for example, share a clock source) with the first communication apparatus, and send an electromagnetic wave signal for sensing that is coherent (for example, has a constant phase difference) with the first device. The first communication apparatus may further determine, based on a phase difference between an echo signal of the second communication apparatus and an echo signal of the first communication apparatus, a time difference of arrival between time of arrival from the target to the first communication apparatus and time of arrival from the target to the second communication apparatus, to determine a distance difference between a distance from the target to the first communication apparatus and a distance from the target to the second communication apparatus, to position the target. Therefore, in this embodiment of this application, when the second communication apparatus has the coherent signal processing capability, for the sensing data request of the first communication apparatus, the second communication apparatus may feed back the sensing data including the echo signal to the first communication apparatus. Optionally, the sensing data may also include the sensing result of the second communication apparatus.

In some implementations, when the second communication device has the coherent signal processing capability, the first communication apparatus may alternatively send a sensing data request used to request the echo signal, or when the second communication device does not have the coherent signal processing capability, the first communication apparatus may send a sensing data request used to request the sensing result. The second communication apparatus may alternatively determine, based on the request of the first communication apparatus, a type of fed-back sensing data, and feed back the sensing data to the first communication apparatus. In an example, the sensing data request may include a 1-bit sensing data type indication field. When the field is 0, the sensing result is requested. When the field is 1, the echo signal is requested. The second communication apparatus may feed back the sensing data to the first communication apparatus based on a value of the sensing data type indication field in the sensing data request received from the first communication apparatus.

S204: The first communication apparatus determines a sensing result of the to-be-sensed target based on the sensing data from the second communication apparatus.

When the second communication apparatus does not have the coherent signal processing capability, the second communication apparatus may send, to the first communication apparatus, the sensing data including a sensing result like locations, movement directions, and movement speeds of all targets sensed by the second terminal device in the world coordinate system. After receiving the sensing data from the second communication apparatus, the first communication apparatus may sense the to-be-sensed target in an area that can be sensed by the first communication apparatus, and determine the sensing result of the to-be-sensed target based on the sensing result of the second communication apparatus. In an example, a to-be-sensed target terminal device A moves from the area that can be sensed by the first communication apparatus to an area that can be sensed by the second communication apparatus. Although the first communication apparatus cannot directly obtain a sensing result of the terminal device A, the first communication apparatus can obtain a sensing result of the second communication apparatus from the second communication apparatus through sensing collaboration with the second communication apparatus, so that a sensing range is expanded.

When the second communication apparatus has the coherent signal processing capability, the second communication apparatus may send the sensing data including the echo signal to the first communication apparatus. After receiving the sensing data from the second communication apparatus, the first communication apparatus may determine, based on the location of the second communication apparatus, and the direction of the antenna used for sending the electromagnetic wave signal for sensing with reference to the echo signal received by the second communication apparatus, information such as a location, a movement direction, and a movement speed of a target sensed by the second communication apparatus in a real coordinate system (for example, the world coordinate system). In this case, the sensing result of the to-be-sensed target is further determined. Certainly, to reduce operation overheads, the sensing data sent by the second communication apparatus may further include the sensing result of the second communication apparatus, for example, the information such as the location movement direction and the movement speed of a target sensed by the second communication apparatus in the real coordinate system (for example, the world coordinate system). This is not limited in this application.

In addition, based on the echo signal of the second communication apparatus, the first communication apparatus may further correct the sensing result of the to-be-sensed target or determine the sensing result of the sensing target, to obtain a more accurate sensing result, further improving sensing accuracy. In an example, when both the first communication apparatus and the second communication apparatus sense the to-be-sensed target, the first communication apparatus may further determine, based on the phase difference between the echo signal of the second communication apparatus and the echo signal of the first communication apparatus, a distance difference R between a distance from the to-be-sensed target to the first communication apparatus and a distance from the to-be-sensed target to the second communication apparatus, to correct a location of the to-be-sensed target. For example, the first communication apparatus corrects whether the to-be-sensed target is located on a hyperbola that uses the first communication apparatus and the second communication apparatus as focal points where a distance difference between distances from the to-be-sensed target to the two focal points is always R, to improve sensing accuracy. Alternatively, the first communication apparatus may further determine, based on phase differences between echo signals of the plurality of second communication apparatuses and the echo signal of the first communication apparatus, distance differences between distances from the to-be-sensed target to the plurality of second communication apparatuses and the distance from the to-be-sensed target to the first communication apparatus, and position the to-be-sensed target based on the plurality of distance differences, for example, position the to-be-sensed target by using a TDOA positioning technology, to obtain a more accurate sensing result, improving sensing accuracy.

It should be understood that, in this embodiment of this application, there may be one or more to-be-sensed targets, and a specific object like an automobile may be sensed, or a surrounding environment may be sensed, for example, all targets existing in the surrounding environment are sensed. This is not limited in this embodiment of this application.

FIG. 5 is a diagram of collaboration data transmission between communication apparatuses according to an embodiment of this application. The first communication apparatus and the second communication apparatus are used as an example. If the second communication apparatus does not have the collaboration capability, the second communication apparatus does not send the sensing data to the first communication apparatus, and there is no collaboration data transmission between the first communication apparatus and the second communication apparatus. If the second communication apparatus has the collaboration capability, based on whether the second communication apparatus has the coherent signal processing capability, when the second communication apparatus has the coherent signal processing capability, the second communication apparatus may transmit, to the first communication apparatus, the sensing data including the echo signal (coherent processing); or when the second communication apparatus does not have the coherent signal processing capability, the second communication apparatus may transmit, to the first communication apparatus, the sensing data including the sensing result (non-coherent processing).

According to the sensing method in this application, the first communication apparatus can sense the to-be-sensed target not only in the sensing area of the first communication apparatus but also in the sensing area of the second communication apparatus, improving the sensing capability of the first communication apparatus.

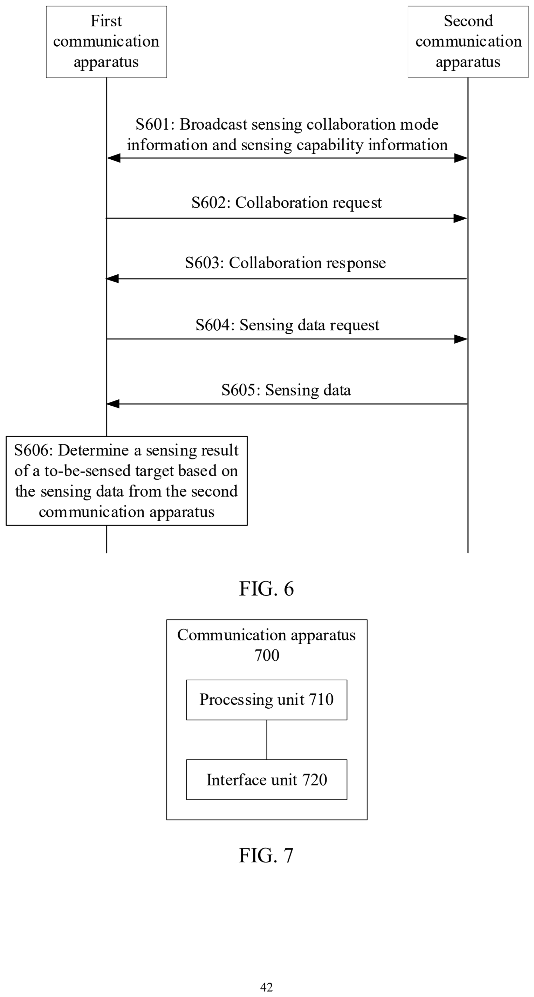

In some implementations, before sending the sensing data request to the second communication apparatus, the first communication apparatus may further establish a collaboration relationship with the second communication apparatus. Refer to a diagram of a sensing method shown as FIG. 6. The method includes the following steps.

S601: A first communication apparatus and a second communication apparatus broadcast sensing collaboration mode information (or tables) and sensing capability information (or tables).

S602: The first communication apparatus sends a collaboration request (Collaboration request) to the second communication apparatus, and correspondingly, the second communication apparatus receives the collaboration request.

S603: The second communication apparatus sends a collaboration response (Collaboration response) to the first communication apparatus, and correspondingly, the first communication apparatus receives the collaboration response.

In this embodiment of this application, the first communication apparatus may determine, based on sensing collaboration mode information and sensing capability information that are broadcast by the second communication apparatus, whether the second communication apparatus meets a requirement for performing sensing collaboration with the first communication apparatus, for example, determine whether the second communication apparatus has a sensing collaboration capability, and whether a sensing capability of the second communication apparatus meets a sensing requirement for a to-be-sensed target. When the second communication apparatus has the sensing collaboration capability and meets the requirement for performing sensing collaboration with the first communication apparatus, the first communication apparatus may send the collaboration request to the second communication apparatus, where the collaboration request may carry identification information of the first communication apparatus, and the second communication apparatus may further include, in the collaboration response sent to the first communication apparatus, indication information indicating whether to perform collaboration. For example, the collaboration response includes a 1-bit indication bit. When the indication bit is 1, it indicates to perform collaboration; or when the indication bit is 0, it indicates not to perform collaboration. After receiving, from the second communication apparatus, a collaboration response indicating to perform collaboration, the first communication apparatus may establish a collaboration relationship with the second communication apparatus when the second communication apparatus indicates to perform collaboration.

S604: The first communication apparatus sends a sensing data request to the second communication apparatus, and correspondingly, the second communication apparatus receives the sensing data request.

S605: The second communication apparatus sends sensing data to the first communication apparatus, and correspondingly, the first communication apparatus receives the sensing data from the second communication apparatus.

When the second communication apparatus has the coherent signal processing capability, the sensing data includes an echo signal received by the second communication apparatus, or when the second communication apparatus does not have the coherent signal processing capability, the sensing data includes a sensing result of the second communication apparatus.

S606: The first communication apparatus determines a sensing result of the to-be-sensed target based on the sensing data from the second communication apparatus.

For implementation of S604 to S606, refer to implementation of S202 to S204. Details are not described again.

In addition, the sensing method uses an example in which the second communication apparatus sends the sensing data of the second communication apparatus to the first communication apparatus. It may be understood that information such as the sensing data sent by the second communication apparatus to the first communication apparatus may alternatively be from another communication apparatus, for example, a third communication apparatus. The second communication apparatus may alternatively be used as a relay node for performing sensing collaboration between the another communication apparatus and the first communication apparatus, to allow the first communication apparatus to perform sensing collaboration with the another communication apparatus.

It should be understood that, the foregoing uses an example in which the first communication apparatus and the second communication apparatus are network apparatuses or terminal apparatuses for description. It may be understood that the first communication apparatus and the second communication apparatus may alternatively be road side units (road side units, RSUs), non-real-time (non-real time) radio intelligent controllers (radio intelligent controllers, RICs), or near-real-time (near-real-time) RICs, or components (such as processors, chips, or chip systems) of an RSU, a non-real time RIC, or a near-real-time RIC, or apparatuses that match an RSU, a non-real time RIC, or a near-real-time RIC for use.

For example, when the first communication apparatus and the second communication apparatus are network apparatuses, the first communication apparatus and the second communication apparatus may be base stations in a 4G LTE network or base stations in a 5G new radio (new radio, NR) network. In the 4G LTE network, an interface manner between network devices is an X2 interface. The first communication apparatus and the second communication apparatus may send or receive control plane signaling such as the sensing collaboration mode information, the sensing capability information, the collaboration request, and the collaboration response via the X2 interface, or may send or receive user plane data such as the sensing data via the X2 interface. Correspondingly, in the 5G NR network, an interface manner between the network devices is an Xn interface. It should be understood that a connection manner between the network devices is not limited in this application.

The Xn interface is used as an example. As shown in Table 1, in this embodiment of this application, definitions of signaling exchange and field content related to sensing of an Xn control plane and an Xn user plane may be added to 3GPP specifications. Xn control plane functions (Xn-C functions) include newly added base station information management functions (BS information management functions) that are used to address signaling exchange related to sensing of the Xn control plane, for example, are used to schedule signaling for a base station capability information table, a collaboration mode table, and the like. The Xn control plane functions may further include one or more of the following functions: Xn-C interface management and error handling functions (Xn-C interface management and error handling functions), UE mobility management functions (UE mobility management functions), dual connectivity functions (Dual connectivity function), an energy saving function (Energy saving function), a resource coordination function (Resource coordination function), a secondary radio access technology (radio access technology, RAT) data volume reporting function, a trace function (Trace function), a load management function (Load management function), a data exchange for self-optimization function (Data exchange for self-optimization function), an IAB support function (IAB support function), a small data transmission function (Small data transmission function), and a quality monitoring and control (quality monitoring and control, QMC) function (QMC function). Xn user plane functions (Xn-U functions) include a newly added sensing data transfer function (Sensing data transfer function) that may be used to address transfer of Xn user plane sensing data (an echo signal or a sensing result). The Xn user plane function may further include one or more of the following functions: a data transfer function (Data transfer function), a flow control function (Flow control function), an assistance information function (Assistance information function), and a fast retransmission function (Fast retransmission function).

**Table 1**

| | |
|---|---|
| Xn control plane functions | Xn-C interface management and error handling functions |
| | UE Mobility Management functions |
| | Base station information management functions |
| | Dual connectivity function |
| | Energy saving function |
| | Resource coordination function |
| | Secondary RAT data volume reporting function |
| | Trace function |
| | Load management function |
| | Data exchange for self-optimization function |
| | IAB support function |
| | Small data transmission function |
| | QMC function |
| Xn user plane functions | Data transfer function |
| | Sensing data transfer function |
| | Flow control function |
| | Assistance information function |
| | Fast retransmission function |

Correspondingly, BS-related field content may be added to a class (class) 1 elementary procedure (elementary procedure, EP) part in an Xn interface protocol (namely, the 3GPP 38.423 specifications). As shown in Table 2, in the current specifications, each elementary procedure is configured with an initiating message (Initiating Message) field, a successful outcome response message (Successful Outcome Response message) field, and an unsuccessful outcome response message (Unsuccessful Outcome Response message) field. In this embodiment of this application, retrieve BS context (Retrieve BS Context) may be newly added to the elementary procedure. A retrieve BS context request (RETRIEVE BS CONTEXT REQUEST) field, a retrieve BS context response (RETRIEVE BS CONTEXT RESPONSE) field, and a retrieve BS context failure (RETRIEVE BS CONTEXT FAILURE) field are newly added to the retrieve BS context, and are used to implement signaling exchange and feedback between different network devices. The elementary procedure may further include a handover request (HANDOVER REQUEST) field, a handover request acknowledge (HANDOVER REQUEST ACKNOWLEDGE) field, and a handover preparation failure (HANDOVER PREPARATION FAILURE) field that correspond to handover preparation (Handover Preparation), and a retrieve UE context request (RETRIEVE UE CONTEXT REQUEST) field, a retrieve UE context response (RETRIEVE UE CONTEXT RESPONSE) field, a retrieve UE context failure (RETRIEVE UE CONTEXT FAILURE) field, and the like that correspond to retrieve UE context (Retrieve UE Context).

**Table 2**

| Elementary procedure | Initiating message | Successful outcome response message | Unsuccessful outcome response |
|---|---|---|---|
| Handover preparation | Handover request | Handover request acknowledge | Handover preparation failure |
| Retrieve UE context | Retrieve UE context request | Retrieve UE context response | Retrieve UE context failure |
| Retrieve BS context | Retrieve BS context request | Retrieve BS context response | Retrieve BS context failure |
| ... | ... | ... | ... |

In a 5G system architecture, a network device may use a CU-DU split scheme. In an NG-RAN, a network device (for example, a gNB) is internally divided into two parts: a gNB-CU and a gNB-DU, and the two parts are connected via an F1 interface. Similarly, in an evolved mobile telecommunications system (universal mobile telecommunications system, UMTS) terrestrial radio access network (evolved UMTS terrestrial radio access network, E-UTRAN), a network device (for example, an en-gNB) is internally divided into two parts: a gNB-CU and a gNB-DU, and the two parts are also connected via an F1 interface.

In this embodiment of this application, definitions of signaling exchange and field content related to sensing of an Xn control plane and an F1 user plane may be added to 3GPP specifications. F1 control plane functions (F1-C functions) include a newly added F1 DU context management function (F1 DU context management function) field that is used to address signaling exchange related to F1 control plane awareness, for example, signaling used to schedule a base station capability information table and a collaboration mode table. The F1 control plane functions may further include one or more of the following functions: an F1 interface management function (F1 interface management function), a system information management function (System information management function), an F1 UE context management function (F1 UE context management function), an RRC message transfer function (RRC message transfer function), a paging function (Paging function), a warning messages information transfer function (Warning messages information transfer function), a remote interference management (remote interference management, RIM) message transfer function, a trace function (Trace function), a load management function (Load management function), a self-optimization support function (Self-optimization support function), a positioning function (Positioning function), an IAB support function (IAB support function), an NR mobile communication base station (mobile base station, MBS) function (NR MBS function), a personal digital cellular (personal digital cellular, PDC) measurement function (PDC measurement function), and a quality of experience (quality of experience, QoE) function (QoE function). The F1 user plane functions (F1-U functions) include a newly added sensing data transfer function (Transfer of Sensing data) field that may be used to address transfer of F1 user plane sensing data (an echo signal or a sensing result). The F1 user plane function may further include one or more of the following functions: transfer of user data (Transfer of user data), and a flow control function (Flow control function).

**Table 3**

| | |
|---|---|
| F1 control plane functions | F1 interface management function |
| | System information management function |
| | F1 UE context management function |
| | F1 DU context management function |
| | RRC message transfer function |
| | Paging function |
| | Warning messages information transfer function |
| | RIM message transfer function |
| | Trace function |
| | Load management function |
| | Self-optimization support function |
| | Positioning function |
| | IAB support function |
| | NR MBS function |
| | PDC measurement function |
| | QoE function |
| F1 user plane functions | Transfer of user data |
| | Sensing data transfer function |
| | Flow control function |

Correspondingly, DU-related field content may be added to a class 1 EP in an F1 interface protocol (the 3GPP 38.473 specifications). As shown in Table 4, each elementary procedure (Elementary Procedure) is configured with an initiating message (Initiating Message) field, a successful outcome response message (Successful Outcome Response message) field, and an unsuccessful outcome response message (Unsuccessful Outcome Response message) field. In this embodiment of this application, retrieve DU context setup (DU Context Setup) may be newly added to the elementary procedure. A DU context setup request (DU CONTEXT SETUP REQUEST) field, a DU context setup response (DU CONTEXT SETUP RESPONSE) field, and a DU context setup failure (DU CONTEXT SETUP FAILURE) field are newly added to the retrieve DU context setup, and are used to implement signaling exchange and feedback between the different network devices. The elementary procedure may further include a reset (RESET) field and a reset acknowledge (RESET ACKNOWLEDGE) field that correspond to reset (reset), an F1 setup request (F1 SETUP REQUEST) field, an F1 setup response (F1 SETUP RESPONSE) field, and an F1 setup failure (F1 SETUP FAILURE) field that correspond to F1 setup (F1 Setup), and a UE context setup request (UE CONTEXT SETUP REQUEST) field, a UE context setup response (UE CONTEXT SETUP RESPONSE) field, a UE context setup failure (UE CONTEXT SETUP FAILURE) field, and the like that correspond to retrieve UE context setup (UE Context Setup).

**Table 4**

| Elementary procedure | Initiating message | Successful outcome response message | Unsuccessful outcome response message |
|---|---|---|---|
| Reset | Reset | Reset acknowledge | |
| F1 setup | F1 setup request | F1 setup response | F1 setup failure |
| Retrieve UE context setup | UE context setup request | UE context setup response | UE context setup failure |
| Retrieve DU context setup | DU context setup request | DU context setup response | DU context setup failure |
| ... | ... | ... | ... |

The foregoing method is further applicable to an O-RAN architecture. A function of signaling exchange related to sensing is added to an F1-C interface between an O-CU-CP and an O-DU, to exchange sensing collaboration mode information, sensing capability information, and the like. A function of sensing data transfer is added to an F1-U interface between an O-CU-UP and the O-DU, to transfer sensing data such as an echo signal and a sensing result.

It may be understood that, to implement functions in the foregoing embodiments, the first communication apparatus and the second communication apparatus include corresponding hardware structures and/or software modules for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

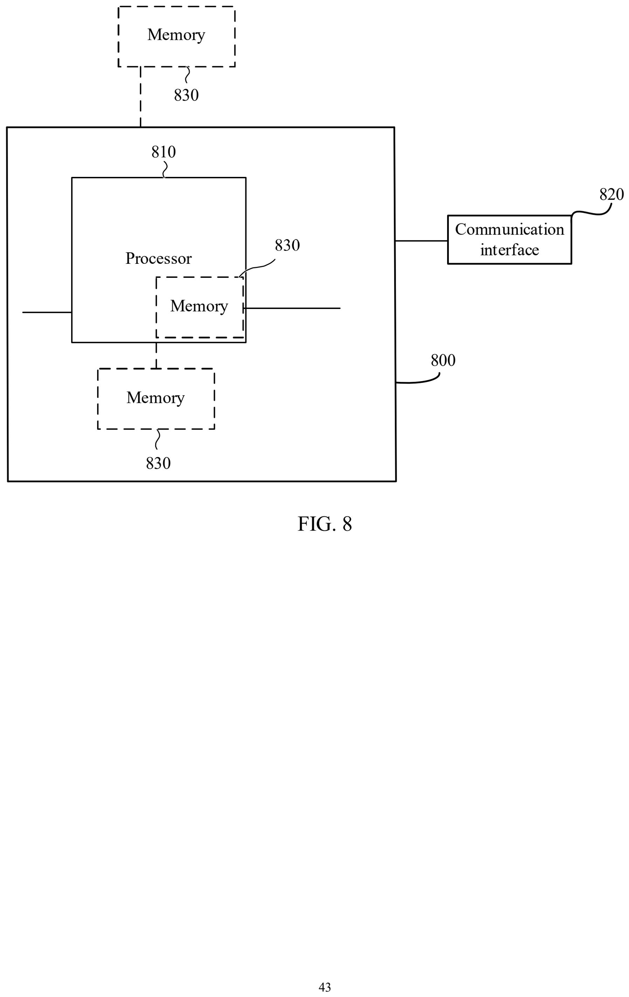

FIG. 7 and FIG. 8 are diagrams of possible structures of communication apparatuses according to embodiments of this application. The communication apparatuses may be configured to implement functions of the first communication apparatus or the second communication apparatus in the foregoing method embodiments, and therefore can further implement beneficial effects of the foregoing method embodiments.

As shown in FIG. 7, a communication apparatus 700 includes a processing unit 710 and an interface unit 720. The interface unit 720 may alternatively be a transceiver unit or an input/output interface. The communication apparatus 700 may be configured to implement a function of the first communication apparatus or the second communication apparatus in the method embodiment shown as FIG. 2.

When the communication apparatus 700 is configured to implement a function of the first communication apparatus in the method embodiment shown as FIG. 2,
the interface unit 720 is configured to: receive sensing collaboration mode information from a second communication apparatus, where the sensing collaboration mode information includes information about whether the second communication apparatus has a coherent signal processing capability; send a sensing data request to the second communication apparatus; and receive sensing data from the second communication apparatus, where when the second communication apparatus has the coherent signal processing capability, the sensing data includes an echo signal received by the second communication apparatus, or when the second communication apparatus does not have the coherent signal processing capability, the sensing data includes a sensing result of the second communication apparatus; and the processing unit 710 is configured to determine a sensing result of a to-be-sensed target based on the sensing data.

In a possible design, when the second communication device has the coherent signal processing capability, the sensing data request is used to request the echo signal, or when the second communication device does not have the coherent signal processing capability, the sensing data request is used to request the sensing result.

In a possible design, the sensing collaboration mode information further includes information about whether the second communication apparatus has a sensing collaboration capability, and before the interface unit 720 sends the sensing data request to the second communication apparatus, the processing unit 710 is further configured to determine that the second communication apparatus has the sensing collaboration capability.

In a possible design, when the sensing data includes the echo signal received by the second communication apparatus, and when the processing unit 710 determines the sensing result of the to-be-sensed target based on the sensing data, the processing unit is specifically configured to determine the sensing result of the to-be-sensed target based on a location and an antenna direction of the second communication apparatus, and the echo signal.

In a possible design, the interface unit 720 is further configured to receive sensing capability information from the second communication apparatus, where the sensing capability information includes one or more of the following information about the second communication apparatus: range resolution, range accuracy, angular resolution, angular accuracy, Doppler resolution, and Doppler accuracy; and the processing unit 710 is further configured to determine that a sensing capability of the second communication apparatus meets a sensing requirement for the to-be-sensed target.

When the communication apparatus 700 is configured to implement a function of the second communication apparatus in the method embodiment shown as FIG. 2,
the processing unit 710 is configured to determine sensing collaboration mode information, where the sensing collaboration mode information includes information about whether the second communication apparatus has a coherent signal processing capability; and the interface unit 720 is configured to: send sensing collaboration mode information to a first communication apparatus, receive a sensing data request from the first communication apparatus, and send sensing data to the first communication apparatus, where when the second communication apparatus has the coherent signal processing capability, the sensing data includes an echo signal received by the second communication apparatus, or when the second communication apparatus does not have the coherent signal processing capability, the sensing data includes a sensing result of the second communication apparatus.

In a possible design, when the second communication device has the coherent signal processing capability, the sensing data request is used to request the echo signal, or when the second communication device does not have the coherent signal processing capability, the sensing data request is used to request the sensing result.

In a possible design, the sensing collaboration mode information further includes information about whether the second communication apparatus has a sensing collaboration capability.

In a possible design, the interface unit 720 is further configured to send sensing capability information to the first communication apparatus, where the sensing capability information includes at least one of the following: range resolution, range accuracy, angular resolution, angular accuracy, Doppler resolution, and Doppler accuracy.

As shown in FIG. 8, this application further provides a communication apparatus 800. The communication apparatus 800 includes a processor 810, and may further include a communication interface 820. The processor 810 and the communication interface 820 are coupled to each other. It may be understood that the communication interface 820 may be a transceiver, an input/output interface, an input interface, an output interface, an interface circuit, or the like. Optionally, the communication apparatus 800 may further include a memory 830, configured to store instructions executed by the processor 810, or store input data required by the processor 810 to run instructions, or store data generated after the processor 810 runs instructions. The memory 830 may be a physically independent unit, or may be coupled to the processor 810, or the processor 810 includes the memory 830.

When the communication apparatus 800 is configured to implement the method shown as FIG. 2, the processor 810 is configured to implement a function of the processing unit 710, and the communication interface 820 is configured to implement a function of the interface unit 720.

It should be noted that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA), or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or transmitted from one computer-readable storage medium to another computer-readable storage medium. For example, the computer program or instructions may be transmitted from one network device, terminal, computer, server, or data center to another network device, terminal, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In addition, it should be understood that in embodiments of this application, the term "for example" is used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A sensing method, comprising:
receiving, by a first communication apparatus, sensing collaboration mode information from a second communication apparatus, wherein the sensing collaboration mode information comprises information about whether the second communication apparatus has a coherent signal processing capability;
sending, by the first communication apparatus, a sensing data request to the second communication apparatus;
receiving, by the first communication apparatus, sensing data from the second communication apparatus, wherein when the second communication apparatus has the coherent signal processing capability, the sensing data comprises an echo signal received by the second communication apparatus, or when the second communication apparatus does not have the coherent signal processing capability, the sensing data comprises a sensing result of the second communication apparatus; and
determining, by the first communication apparatus, a sensing result of a to-be-sensed target based on the sensing data.

2. The method according to claim 1, wherein when the second communication device has the coherent signal processing capability, the sensing data request is used to request the echo signal, or when the second communication device does not have the coherent signal processing capability, the sensing data request is used to request the sensing result.

3. The method according to claim 1 or 2, wherein the sensing collaboration mode information further comprises information about whether the second communication apparatus has a sensing collaboration capability, and before sending, by the first communication apparatus, the sensing data request to the second communication apparatus, the method further comprises:
determining, by the first communication apparatus, that the second communication apparatus has the sensing collaboration capability.

4. The method according to any one of claims 1 to 3, wherein when the sensing data comprises the echo signal received by the second communication apparatus, determining, by the first communication apparatus, the sensing result of the to-be-sensed target based on the sensing data comprises:
determining, by the first communication apparatus, the sensing result of the to-be-sensed target based on a location and an antenna direction of the second communication apparatus, and the echo signal.

5. The method according to any one of claims 1 to 4, wherein the method further comprises:
receiving, by the first communication apparatus, sensing capability information from the second communication apparatus, wherein the sensing capability information comprises one or more of the following information about the second communication apparatus: range resolution, range accuracy, angular resolution, angular accuracy, Doppler resolution, and Doppler accuracy; and
determining, by the first communication apparatus, that a sensing capability of the second communication apparatus meets a sensing requirement for the to-be-sensed target.

6. A sensing method, comprising:
sending, by a second communication apparatus, sensing collaboration mode information to a first communication apparatus, wherein the sensing collaboration mode information comprises information about whether the second communication apparatus has a coherent signal processing capability;
receiving, by the second communication apparatus, a sensing data request from the first communication apparatus; and
sending, by the second communication apparatus, sensing data to the first communication apparatus, wherein when the second communication apparatus has the coherent signal processing capability, the sensing data comprises an echo signal received by the second communication apparatus, or when the second communication apparatus does not have the coherent signal processing capability, the sensing data comprises a sensing result of the second communication apparatus.

7. The method according to claim 6, wherein when the second communication device has the coherent signal processing capability, the sensing data request is used to request the echo signal, or when the second communication device does not have the coherent signal processing capability, the sensing data request is used to request the sensing result.

8. The method according to claim 6 or 7, wherein the sensing collaboration mode information further comprises information about whether the second communication apparatus has a sensing collaboration capability.

9. The method according to any one of claims 6 to 8, wherein the method further comprises:
sending, by the second communication apparatus, sensing capability information to the first communication apparatus, wherein
the sensing capability information comprises at least one of the following: range resolution, range accuracy, angular resolution, angular accuracy, Doppler resolution, and Doppler accuracy.

10. A communication apparatus, comprising an interface unit and a processing unit, wherein
the interface unit is configured to receive and send data; and
the processing unit is configured to perform the method according to any one of claims 1 to 9 by using the interface unit.

11. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 9 through a logic circuit or by executing instructions.

12. A computer program product, comprising instructions, wherein when the instructions are executed, the method according to any one of claims 1 to 9 is implemented.

13. A chip system, wherein the chip system comprises a processor, the processor is configured to be coupled to a memory, the memory is configured to store a program or instructions, and when the program or the instructions are executed by the processor, the method according to any one of claims 1 to 9 is implemented.

14. A computer-readable storage medium, wherein the storage medium stores a computer program or instructions, and when the computer program or the instructions are executed, the method according to any one of claims 1 to 9 is implemented.
